(19) Europäisches Patentamt
European Patent Office
Office européen des brevets

(11) **EP 2 052 623 A1**

(12) **EUROPÄISCHE PATENTANMELDUNG**

(43) Veröffentlichungstag:
**29.04.2009 Patentblatt 2009/18**

(51) Int Cl.:
*A23C 11/10* *(2006.01)*    *A23J 3/16* *(2006.01)*

(21) Anmeldenummer: 07020940.8

(22) Anmeldetag: **25.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Sojaland GmbH**
**19061 Schwerin (DE)**

(72) Erfinder:
• **Wild, Hans-Peter**
**69214 Eppelheim (DE)**

• **Sass. Matthias**
**68723 Oftersheim (DE)**
• **Ringer, Christian**
**19055 Schwerin (DE)**

(74) Vertreter: **Grünecker, Kinkeldey, Stockmair & Schwanhäusser Anwaltssozietät Leopoldstraße 4 80802 München (DE)**

(54) **Verfahren und Anlage zur kontinuierlichen Herstellung von Lebensmitteln aus Hülsenfrüchten**

(57) Die vorliegende Erfindung betrifft ein Verfahren und eine Anlage zur kontinuierlichen Herstellung von Lebensmitteln aus Hülsenfrüchten, wobei das Verfahren die folgenden Schritte umfasst:

a) Schälen der Hülsenfrüchte,

b) Vermahlen der geschälten Hülsenfrüchte in Gegenwart von Wasser bei 70 bis 90 °C zur Herstellung einer Aufschlämmung,

c) Quellen der Hülsenfrüchte in der Aufschlämmung,

d) Wärmebehandlung der Aufschlämmung bei 90 bis 110 °C,

e) Feinvermahlen der Aufschlämmung auf eine durchschnittliche Teilchengröße von 30 $\mu$m oder weniger,

f) Heißhalten der Aufschlämmung bei 90 bis 110 °C und

g) Abtrennen der unlöslichen Bestandteile von der Aufschlämmung.

EP 2 052 623 A1

## Beschreibung

Die vorliegende Erfindung betrifft ein Verfahren und eine Anlage zur kontinuierlichen Herstellung von Lebensmitteln aus Hülsenfrüchten, insbesondere aus Sojabohnen.

Hülsenfrüchte zeichnen sich durch einen hohen Gehalt an Proteinen und ungesättigten Fettsäuren aus. Aus diesem Grund sind sie für eine gesundheitsbewusste Ernährung essentiell. Der durchschnittliche Proteingehalt von Sojabohnen z. B. liegt bei etwa 40%.

Produkte auf Sojabasis zählen daher zu den am schnellsten wachsenden Sektoren in der Lebensmittelindustrie. Neben Sojamilch und Getränken auf Sojabasis werden hauptsächlich Produkte, wie Sojasauce, Tofu und auf Soja basierende Fleischersatzprodukte, hergestellt.

Die Verarbeitung von Sojabohnen zu Sojamilch wird in Asien seit langem praktiziert. Beim traditionellen Verfahren werden die Sojabohnen eingeweicht und mit kaltem Wasser vermahlen. Anschließend werden die Feststoffe ("Okara") abgetrennt und der flüssige Rückstand auf 93 bis 100 °C für 30 min erwärmt (Kwok et al., International Journal of Food Science and Technology 1995, Vol. 30, 263 ff.).

Die Sojabohne verfügt über eine sehr aktive endogene Lipoxidase, welche bei der Zerstörung der Bohne freigesetzt wird. Diese verursacht schon während des Einweichens und des Mahlvorgangs die enzymatische Oxidation des in der Bohne enthaltenen Sojaöls. Solche Reaktionen führen zu geruchlich und geschmacklich sehr aktiven Komponenten, die als "grün", "heuartig" oder "bohnig" beschrieben werden.

Während im asiatischen Raum diese Geschmacksnoten akzeptiert sind, ist eine Reduzierung dieser Komponenten für die Verbraucherakzeptanz bei westlichen Konsumenten unumgänglich. Aus diesem Grund verwenden zahlreiche Verfahren optimierende Schritte für die Herstellung eines möglichst geschmacksneutralen Produktes.

So werden beim "Cornell"-Verfahren die eingeweichten Sojabohnen in kochendem Wasser vermahlen und die daraus gewonnene Aufschlämmung anschließend für 10 min auf einer Temperatur von 80 bis 100 °C gehalten (Wilkens et al., Food Technology 1967, Vol. 21, S. 1630 ff.). Durch die Wärmebehandlung wird eine Inaktivierung der Lipoxygenase erreicht, welche für die nachteiligen Oxidationsreaktionen in dem traditionellen Verfahren verantwortlich ist.

Beim "Illinois"-Verfahren werden die Sojabohnen in alkalisiertem Wasser eingeweicht und vor der Vermahlung gekocht (Nelson et al., Journal of Food Science 1976, Vol. 41, S. 57 ff.). Hierdurch können leichtflüchtige Komponenten entfernt werden, welche sonst geschmacklich nachteilig wirken.

In der US-A-5863590 wird ein Verfahren zur Herstellung von Sojamilch beschrieben, in welchem Sojabohnen verwendet werden, die zuvor in Wasser oder Hypochlorit-Lösung eingeweicht wurden. Anschließend werden die eingeweichten Bohnen mit Wasser vermahlen. Das so erhaltene Bohnenpüree wird auf 90 bis 110 °C erhitzt, und anschließend das Okara in einem Dekanter abgetrennt.

Ein deutlicher Nachteil der genannten Verfahren ist allerdings das aufwendige Einweichen der Bohnen, welches eine lange Behandlungsdauer sowie voluminöse Reaktionsbehälter erfordert. Zudem begünstigt der Quellvorgang eine vorgelagerte Enzymaktivität.

Beim "RHHC" (rapid hydration hydrothermal cooking) -Verfahren dagegen, werden die Sojabohnen erst zu Mehl vermahlen, welches anschließend in Wasser aufgeschlämmt wird. Die erhaltene Aufschlämmung wird dann durch Dampfinjektion auf 154 °C erhitzt und für 30 s bei dieser Temperatur gehalten (Kwok et al., International Journal of Food Science and Technology 1995, Vol. 30, 263 ff.). Die durch das Verfahren gewonnene Sojamilch hat zwar einen neutralen Geschmack, enthält dafür aber einen hohen Anteil an Feststoffen. Zudem ist aufgrund der Partikelgröße die Struktur und das Mundgefühl dieser Sojamilch nicht optimal.

Die US-A-4915972 offenbart ein Verfahren zur Herstellung von proteinreichen Lebensmitteln. Dabei werden die proteinhaltigen Ausgangsstoffe, wie beispielsweise Sojabohnen, unter Sauerstoffausschluss bei Temperaturen unter 60 °C vermahlen, um geschmackliche Beeinträchtigungen zu vermeiden. Anschließend wird die Aufschlämmung erhitzt, und die festen Bestandteile werden abgetrennt.

Obwohl die meisten Verfahren die Verwendung von geschälten oder ungeschälten Bohnen zulassen, ist es jedoch von Vorteil die äußere Bohnenschale vor der Verarbeitung zu entfernen, weil damit eine weitgehende Reinigung der Rohware erzielt wird. Zudem wirkt sich eine Schälung vorteilhaft auf die organoleptischen Eigenschaften des Endprodukts aus. Durch die Schälung werden außerdem die Zellstrukturen für Wasser besser zugänglich, wodurch eine kürzere Verfahrensdauer erreicht werden kann.

Neben den Faktoren, welche den Geschmack und das Mundgefühl der produzierten Lebensmittel beeinflussen, ist auch die Gewinnung des in den Hülsenfrüchten enthaltenen Proteins wirtschaftlich von großer Bedeutung. Ein industrielles Verfahren muss daher auch dem Aspekt einer hohen Proteinausbeute Rechnung tragen. Allgemein werden Ausbeuten von mindestens 50% angestrebt, wobei die Ausbeute gemäß folgender Formel definiert ist:

$$Ausbeute[\%] = \frac{hergestelltes\ Konzentrat\ [kg] * \Pr oteingehalt\ des\ Konzentrats\ [\%]}{Rohmasse\ der\ H\ddot{u}lsenfrucht\ [kg] * \Pr oteingehalt\ der\ H\ddot{u}lsenfrucht\ [\%]} * 100$$

Bei der Herstellung von Sojamilch ist üblicherweise ein Proteingehalt von 4 bis 5% in dem Endprodukt erwünscht. Ein Verfahren muss daher sicherstellen, dass bereits im Konzentrat ein ausreichend hoher Proteingehalt enthalten ist.

In vielen Verfahren gehen hohe Proteinausbeuten jedoch mit einem hohen Feststoffanteil einher, welcher sich auf das Mundgefühl negativ auswirkt. Insbesondere sollte die Größe der Teilchen unter 2 μm liegen, damit ein "glattes" und "rundes" Mundgefühl - vergleichbar mit normaler Kuhmilch - entsteht. Die Proteinausbeute darf sich daher nicht zu Lasten der organoleptischen Eigenschaften auswirken.

Für die industrielle Produktion bietet die Firma Tetra Laval eine "Alwin Soy 10"-Anlage an, welche aus einer Mühle, einem oder mehreren Dekantern, einem Dampfinjektor, einem Heißhalter, einem Entgaser und einem Kühler besteht. Bei der Produktion werden die Sojabohnen mit heißem Wasser direkt vermahlen. Das Okara wird dann über einen oder mehrere Dekanter abgetrennt und die erhaltene Flüssigkeit anschließend einer Dampfbehandlung unterzogen. Statt der ganzen Bohne können auch geschälte Bohnen verwendet werden. Die Schälung muss in diesem Fall jedoch separat beigestellt werden, wodurch eine kontinuierliche Verfahrensführung ausgehend von den ganzen Bohnen nicht möglich ist.

Aufgabe der vorliegenden Erfindung ist es, ein Verfahren und eine Anlage bereitzustellen, welche ausgehend von Hülsenfrüchten, insbesondere von Sojabohnen, eine effiziente und wirtschaftliche Herstellung von Lebensmitteln ermöglichen und gleichzeitig ein Produkt mit hoher Verbraucherakzeptanz, insbesondere mit verbesserter Geschmacksnote, liefern.

Diese Aufgabe wird durch ein kontinuierliches Verfahren zur Herstellung von Lebensmitteln aus Hülsenfrüchten gelöst, umfassend die folgenden Schritte:

(a) Schälen der Hülsenfrüchte,

(b) Vermahlen der geschälten Hülsenfrüchte in Gegenwart von Wasser bei 70 bis 90 °C zur Herstellung einer Aufschlämmung,

(c) Quellen der Hülsenfrüchte in der Aufschlämmung,

(d) Wärmebehandlung der Aufschlämmung bei 90 bis 110 °C,

(e) Feinvermahlen der Aufschlämmung auf eine durchschnittliche Teilchengröße von 30 μm oder weniger,

(f) Heißhalten der Aufschlämmung bei 90 bis 110 °C und

(g) Abtrennen der unlöslichen Bestandteile von der Aufschlämmung.

Die Aufgabe wird auch durch eine Anlage zur kontinuierlichen Herstellung von Lebensmitteln aus Hülsenfrüchten gelöst, umfassend:

eine Schälvorrichtung (1),

einen Nassschroter (2),

eine Quellvorrichtung (3),

einen Dampfinjektor (4),

eine Feinmühle (5),

einen Heißhalter (6) und

einen Dekanter (7).

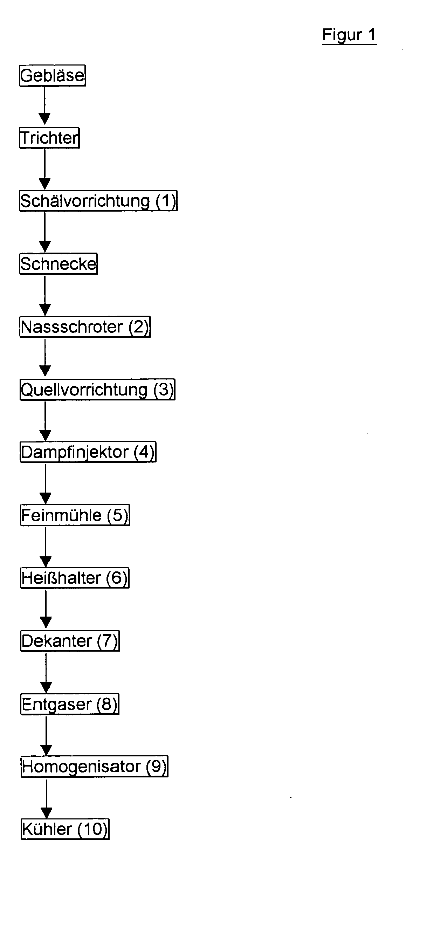

Figur 1 stellt eine bevorzugte Ausführungsform der erfindungsgemäßen Anlage zur kontinuierlichen Herstellung von Lebensmitteln aus Hülsenfrüchten schematisch dar.

Erfindungsgemäß können alle Hülsenfrüchte verwendet werden, welche sich zur Herstellung von Lebensmitteln eignen. Hierzu zählen Erbsen, Bohnen, Linsen, Erdnüsse und Kichererbsen. Bevorzugt werden Sojabohnen verwendet.

Die vorliegenden Erfindung umfasst die Herstellung von Lebensmitteln in allen flüssigen und halbfesten Zubereitungsformen. Dazu gehören Säfte, Milch, Öle und Pasten, besonders bevorzugt Sojamilch.

In dem erfindungsgemäßen Verfahren werden die Hülsenfrüchte direkt eingesetzt ohne zuvor eingeweicht zu werden. Dies hat den Vorteil, dass unerwünschte chemische Reaktionen unterbunden werden können, welche im vorgelagerten Quellvorgang stattfinden. Bei der Verwendung von Sojabohnen kann hierdurch eine vorgelagerte Aktivität der Lipoxidase unterbunden werden, welche durch Oxidationsvorgänge die Qualität der Erzeugnisse erheblich beeinträchtigt.

Das erfindungsgemäße Verfahren umfasst einen integrierten Schritt (a), in welchem die ungequollenen Hülsenfrüchte geschält werden. Üblicherweise gelangen die Hülsenfrüchte mittels eines Gebläses über einen Trichter in den Innenraum eines Rundsiebs. Die Hülsenfrüchte werden durch das Sieb passiert, wobei die Schale abplatzt und abgetrennt wird. Vorzugsweise wird ein Wechselsieb verwendet, welches je nach Größe der Hülsenfrüchte ausgetauscht werden kann. Besonders bevorzugt wird ein Rundsieb mit einer Maschenweite von 4.5 x 9 mm verwendet.

Hierdurch ist ein kontinuierliches Verfahren, ausgehend von der ganzen Hülsenfrucht, möglich. Außerdem wird die Rohware durch den Schälschritt gereinigt, wodurch die Qualität des Produkts verbessert werden kann. Dadurch ist das Verfahren auch für eine große Auswahl an Qualitätsgraden der Rohware zugänglich.

In Schritt (b) des erfindungsgemäßen Verfahrens werden die geschälten Hülsenfrüchte in Gegenwart von Wasser bei 70 bis 90 °C vermahlen. Bevorzugt beträgt die Temperatur des Wassers in Schritt (b) 75 bis 85 °C, besonders bevorzugt 78 bis 82 °C. Das Vermahlen dient der Erzeugung einer großen Oberfläche, damit das Wasser schneller in die Bohne eindringen und das Eiweiß besser gelöst werden kann.

Der pH-Wert der Aufschlämmung in Schritt (b) liegt bevorzugt zwischen 6,5 und 7,5, besonders bevorzugt zwischen 6,8 und 7,2. Insbesondere wird ein pH-Wert der Aufschlämmung von 7 bevorzugt. Durch die Erhöhung des pH-Wertes wird das Eiweiß besser gelöst und die Ausbeute somit gesteigert.

Der Mahlvorgang in Schritt (b) wird bevorzugt unter Ausschluss von Sauerstoff durchgeführt, um Oxidationsreaktionen zu unterbinden.

Die in Schritt (b) erhaltene Aufschlämmung weist bevorzugt einen Feststoffgehalt von 12 bis 16 %, besonders bevorzugt von 13 bis 15 %. Insbesondere wird ein Feststoffgehalt von 14 % bevorzugt.

Vorzugsweise beträgt die durchschnittliche Teilchengröße der in Schritt (b) erhaltenen Aufschlämmung weniger als 100 $\mu$m, besonders bevorzugt weniger als 50 $\mu$m.

In Schritt (c) des erfindungsgemäßen Verfahrens werden die Hülsenfrüchte in der Aufschlämmung gequollen. Die Quelldauer beträgt vorzugsweise 60 bis 180 s, besonders bevorzugt 80 bis 140 s. Das Quellen dient zur Wasseraufnahme der Hülsenfrüchte, und ist sowohl von der Temperatur als auch von der Behandlungsdauer und der Oberfläche der Hülsenfrüchte abhängig.

Der Quellvorgang in Schritt (c) wird bevorzugt bei 60 bis 90 °C durchgeführt, besonders bevorzugt bei 70 bis 80 °C.

In Schritt (d) des erfindungsgemäßen Verfahrens erfolgt eine Wärmebehandlung der Aufschlämmung bei einer Temperatur von 90 bis 110 °C. Besonders bevorzugt beträgt die Temperatur 95 bis 105 °C. Insbesondere wird eine Temperatur von 95 °C bevorzugt. Hierdurch werden eventuell vorhandene oxidierende Enzyme inaktiviert.

Die Dauer der Wärmebehandlung in Schritt (d) beträgt bevorzugt 1 bis 10 s, besonders bevorzugt 3 bis 8 s.

In Schritt (e) des erfindungsgemäßen Verfahrens wird die Aufschlämmung auf eine durchschnittliche Teilchengröße von 50 $\mu$m oder weniger vermahlen. Besonders bevorzugt wird eine durchschnittliche Teilchengröße von 30 $\mu$m oder weniger erzielt.

In Schritt (f) des erfindungsgemäßen Verfahrens erfolgt eine Heißhaltung der Aufschlämmung bei 90 bis 110 °C. Es wird eine Temperatur von 95 bis 105 °C bevorzugt. Besonders bevorzugt findet die Heißhaltung bei 95 °C statt. Diese Heißhaltung dient der vollständigen Inaktivierung der eventuell vorhandenen oxidierenden Enzyme. Wie bei der Wärmebehandlung in Schritt (d) hängt die Inaktivierung sowohl von Temperatur als auch von der Dauer ab.

Die Dauer der Heißhaltung in Schritt (f) beträgt bevorzugt 120 bis 240 s, besonders bevorzugt 150 bis 210 s und insbesondere 170 bis 190 s.

In Schritt (g) des erfindungsgemäßen Verfahrens werden die unlöslichen Bestandteile von der Aufschlämmung abgetrennt. Die Trennschärfe liegt bei 2 $\mu$m und dient dazu, eine Sedimentation im Endprodukt zu verhindern. Dabei beträgt der Feststoffgehalt der daraus gewonnenen Lebensmittel bevorzugt 3 bis 16 %. Besonders bevorzugt ist ein Feststoffgehalt von 5 bis 14 %. Insbesondere wird ein Feststoffgehalt von 8 bis 11 % bevorzugt.

Die Vermeidung der Sedimentation und ein niedriger Feststoffgehalt sind wichtig, um gute organoleptische Eigenschaften zu erhalten, wie z. B. ein "glattes" und "rundes" Mundgefühl, ähnlich der Kuhmilch, bei flüssigen Produkten.

Bevorzugt wird die durch das erfindungsgemäße Verfahren erhaltene Flüssigkeit anschließend entgast, um

**EP 2 052 623 A1**

unangenehme Gerüche sowie durch das Herstellungsverfahren eingetragene Luft zu entfernen. Weiterhin können in einem nachgeschalteten Homogenisator die Eiweißpartikel zerkleinert und verteilt werden. Schließlich wird die Lösung, bevorzugt in einem Kühler, auf 5 bis 25 °C, bevorzugt auf 8 bis 17 °C und besonders bevorzugt auf 10 °C für den anschließenden Transport oder zur Lagerung abgekühlt. Alternativ kann das Erzeugnis sowohl gekühlt als auch ungekühlt zu einem verkaufsfertigen Endprodukt direkt weiterverarbeitet werden.

In dem erfindungsgemäßen Verfahren werden bevorzugt Sojabohnen verwendet, insbesondere für die Herstellung von Sojamilch. Durch die kontinuierliche Verarbeitung der Sojabohnen, verbunden mit einer effizienten Inaktivierung der endogenen Enzyme, kann erfindungsgemäß eine geschmacklich neutrale Sojamilch von hoher Verbraucherakzeptanz in einem Verfahren von besonderer Wirtschaftlichkeit erhalten werden. Zudem ist die durchschnittliche Partikelgröße des aus dem Verfahren gewonnenen Erzeugnisses derart, dass auch ein für den Verbraucher angenehmes Mundgefühl erreicht wird. Schließlich werden durch das erfindungsgemäße Verfahren hohe Proteinausbeuten erzielt, ohne dass diese sich auf die genannten Vorteile des Erzeugnisses, insbesondere auf die organoleptischen Eigenschaften, negativ auswirken.

Die erfindungsgemäße Anlage zur kontinuierlichen Herstellung von Lebensmitteln umfasst die für die Durchführung des erfindungsgemäßen Verfahrens notwendigen Bestandteile.

Die erfindungsgemäße Anlage verfügt daher über eine mechanische Schälvorrichtung (1), in welche die ungequollenen Hülsenfrüchte gegeben werden, bevorzugt unter Verwendung eines Gebläses.

Üblicherweise gelangen die Hülsenfrüchte über einen Trichter in den Innenraum eines Rundsiebs mit einer bevorzugten Maschenweite von 4.5 x 9 mm. Vorzugsweise enthält die Anlage ein Wechselsieb. Im Innenraum des Rundsiebs rotiert ein Fliehkrafthammerwerk mit geringem Abstand zum Sieb. Die Hülsenfrüchte werden durch das Sieb passiert, wobei die Schale abplatzt und abgetrennt wird.

Ferner enthält die erfindungsgemäße Anlage einen Nassschroter (2), in den die geschälten Hülsenfrüchte bevorzugt über eine Schnecke zugeführt werden. Der Nassschroter (2) verfügt bevorzugt über ein mehrstufiges Mahlwerk mit verzahnten Metallrädern, die in einem engen Abstand ineinander verlaufen. Das Schroten wird in Wasser durchgeführt und somit der Ausschluss von Sauerstoff gewährleistet.

Als Quellvorrichtung (3) enthält die erfindungsgemäße Anlage eine oder mehrere thermisch isolierte Rohrleitungen definierter Länge, durch welche die Zwischenerzeugnisse geleitet werden. Außer zum Quellen können diese auch für die Heißhaltung der Zwischenerzeugnisse eingesetzt werden.

Ferner enthält die erfindungsgemäße Anlage einen oder mehrere Dampfinjektoren (4) zur Temperatureinstellung. Vorzugsweise enthält die Anlage eine oder mehrere Mischkammern, über welche der Dampf in Zwischenerzeugnisse injiziert werden kann.

Der Druck des Dampfes wird vorzugsweise auf 2,5 bar eingestellt. Daraus resultiert eine Dampftemperatur von 139°C. Die gewünschte Temperatur in der Aufschlämmung wird in Abhängigkeit der zugeführten Dampfmenge geregelt.

Die erfindungsgemäße Anlage enthält auch eine Feinmühle (5). Als Feinmühle wird bevorzugt eine Kolloidmühle verwendet, besonders bevorzugt eine einstufige Kolloidmühle, in der sich ein Zahnkranz und ein Zahnrad gegenläufig in einem engen Spalt bewegen, durch den die Aufschlämmung gedrückt wird.

Weiterhin enthält die erfindungsgemäße Anlage einen Heißhalter (6). Dieser besteht vorzugsweise aus einer oder mehreren isolierten Rohrleitungen definierter Länge.

Die erfindungsgemäße Anlage enthält weiterhin einen Dekanter (7) zur Abtrennung der festen Bestandteile. Dies geschieht vorzugsweise über Zentrifugation, wobei eine innenliegende Transportschnecke gegen eine rotierende Trommel die festen Bestandteile austrägt. Es können alle handelsüblichen Dekanter in hygienischer Ausführung verwendet werden.

In einer bevorzugten Ausführungsform enthält die erfindungsgemäße Anlage auch einen Entgaser (8), einen Homogenisator (9) und einen Kühler (10). Als Entgaser wird üblicherweise ein Behälter verwendet, in dem über eine Vakuumpumpe ein Unterdruck erzeugt wird. Als Homogenisator kann eine Vorrichtung verwendet werden, in welcher das Produkt mit 100 bis 300 bar, bevorzugt mit 150 bis 250 bar, durch einen Spalt mit einer bevorzugten Breite von weniger als 1 mm, gepumpt wird. Als Kühler dient bevorzugt ein solcher, welcher aus einem Plattenwärmeüberträger im Gegenstromprinzip besteht, wobei das Kühlmedium bevorzugt Wasser ist.

Das folgende Beispiel erläutert die Erfindung.

Beispiel:

1000 kg Sojabohnen wurden in einer mechanischen Schälvorrichtung geschält und bei etwa 80 °C mit Wasser unter Ausschluss von Sauerstoff in einem Nassschroter auf eine durchschnittliche Teilchengröße von kleiner als 50 µm vermahlen. Die so erhaltene Aufschlämmung wies einen pH-Wert von 6,7 und einen Feststoffgehalt von 14% auf. Anschließend wurde die Aufschlämmung bei etwa 75 °C für etwa 110 s gequollen, danach durch Dampfinjektion auf 95 °C erwärmt und für etwa 180 s bei dieser Temperatur gehalten. Nach der Wärmebehandlung wurde die Aufschlämmung mit einer Feinmühle auf eine durchschnittliche Teilchengröße von kleiner als 30 $\mu$m vermahlen. Die Aufschlämmung wurde nach dem Feinvermahlen für etwa 180 s bei 95 °C heißgehalten. Anschließend wurden die unlöslichen Bestandteile durch Dekantieren abgetrennt. Man erhielt ca. 3000 l Sojamilch mit einem Feststoffgehalt von 12 % und einem Proteingehalt von 6 %. Die Proteinausbeute lag damit bei ca. 60 %.

**Patentansprüche**

1. Kontinuierliches Verfahren zur Herstellung von Lebensmitteln aus Hülsenfrüchten, umfassend die folgenden Schritte:

 a) Schälen der Hülsenfrüchte,
 b) Vermahlen der geschälten Hülsenfrüchte in Gegenwart von Wasser bei 70 bis 90 °C zur Herstellung einer Aufschlämmung,
 c) Quellen der Hülsenfrüchte in der Aufschlämmung,
 d) Wärmebehandlung der Aufschlämmung bei 90 bis 110 °C,
 e) Feinvermahlen der Aufschlämmung auf eine durchschnittliche Teilchengröße von 30 $\mu$m oder weniger,
 f) Heißhalten der Aufschlämmung bei 90 bis 110 °C und
 g) Abtrennen der unlöslichen Bestandteile von der Aufschlämmung.

2. Verfahren nach Anspruch 1, wobei in Schritt b) das Wasser zur Vermahlung alkalisiert wird.

3. Verfahren nach einem der Ansprüche 1 oder 2, wobei in Schritt c) die Quelldauer 30 bis 60 s beträgt.

4. Verfahren nach mindestens einem der Ansprüche 1 bis 3, wobei in Schritt d) die Dauer der ersten Wärmebehandlung 120 bis 360 s beträgt.

5. Verfahren nach mindestens einem der Ansprüche 1 bis 4, wobei in Schritt f) die Dauer der Heißhaltung 120 bis 240 s beträgt.

6. Verfahren nach mindestens einem der Ansprüche 1 bis 7, wobei als Hülsenfrüchte Sojabohnen verwendet werden.

7. Anlage zur kontinuierlichen Herstellung von Lebensmitteln aus Hülsenfrüchten, umfassend:

 eine Schälvorrichtung (1),
 einen Nassschroter (2),
 eine Quellvorrichtung (3);
 einen Dampfinjektor (4),
 eine Feinmühle (5),
 einen Heißhalter (6) und
 einen Dekanter (7).

Figur 1

```
Gebläse
  │
  ▼
Trichter
  │
  ▼
Schälvorrichtung (1)
  │
  ▼
Schnecke
  │
  ▼
Nassschroter (2)
  │
  ▼
Quellvorrichtung (3)
  │
  ▼
Dampfinjektor (4)
  │
  ▼
Feinmühle (5)
  │
  ▼
Heißhalter (6)
  │
  ▼
Dekanter (7)
  │
  ▼
Entgaser (8)
  │
  ▼
Homogenisator (9)
  │
  ▼
Kühler (10)
```

Europäisches
Patentamt

**EUROPÄISCHER RECHERCHENBERICHT**

Nummer der Anmeldung

EP 07 02 0940

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/020714 A (HANMI WHOLE SOYMILK CO LTD [KR]; CHO SANG KYUN [KR]; OH SEUNG HOON [KR] 10. März 2005 (2005-03-10) * Seite 4, Zeile 26 - Seite 8, Zeile 25; Abbildung 1; Beispiele * ----- | 1-7 | INV. A23C11/10 A23J3/16 |
| X | US 4 885 185 A (KITAZUME KIYOSHI [JP] ET AL) 5. Dezember 1989 (1989-12-05) * Spalte 2, Zeile 40 - Zeile 65; Anspruch 1; Beispiele * ----- | 1-7 | |
| X | US 4 194 018 A (BUHLER MARCEL [CH] ET AL) 18. März 1980 (1980-03-18) * Spalte 2, Zeile 61 - Spalte 4, Zeile 50; Beispiele * ----- | 1-7 | |
| A | US 4 245 553 A (NAKAMURA HIROSHI) 20. Januar 1981 (1981-01-20) * Anspruch 1; Abbildung 2 * ----- | 1-7 | |

RECHERCHIERTE SACHGEBIETE (IPC)

A23C
A23J

Der vorliegende Recherchenbericht wurde für alle Patentansprüche erstellt

| Recherchenort | Abschlußdatum der Recherche | Prüfer |
|---|---|---|
| München | 1. April 2008 | Merkl, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 07 02 0940

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-04-2008

| Im Recherchenbericht angeführtes Patentdokument | Datum der Veröffentlichung | Mitglied(er) der Patentfamilie | Datum der Veröffentlichung |
|---|---|---|---|
| WO 2005020714 A | 10-03-2005 | CN 1845682 A<br>JP 2007503828 T<br>KR 20050023778 A<br>US 2007031576 A1 | 11-10-2006<br>01-03-2007<br>10-03-2005<br>08-02-2007 |
| US 4885185 A | 05-12-1989 | CA 1299010 C<br>DE 3631970 A1<br>FR 2587590 A1<br>GB 2180436 A<br>JP 1771195 C<br>JP 4061615 B<br>JP 62069960 A | 21-04-1992<br>26-03-1987<br>27-03-1987<br>01-04-1987<br>30-06-1993<br>01-10-1992<br>31-03-1987 |
| US 4194018 A | 18-03-1980 | AR 211660 A1<br>CH 616059 A5<br>DE 2745221 A1<br>ES 463005 A1<br>FR 2366798 A1<br>GB 1553008 A<br>IN 145568 A1<br>JP 1090844 C<br>JP 53047553 A<br>JP 56033056 B<br>MX 4965 E<br>MY 6181 A<br>PH 14331 A<br>SE 433698 B<br>SE 7711280 A<br>ZA 7705741 A | 15-02-1978<br>14-03-1980<br>13-04-1978<br>16-06-1978<br>05-05-1978<br>19-09-1979<br>11-11-1978<br>31-03-1982<br>28-04-1978<br>31-07-1981<br>20-01-1983<br>31-12-1981<br>29-05-1981<br>12-06-1984<br>09-04-1978<br>30-08-1978 |
| US 4245553 A | 20-01-1981 | BE 870645 A1<br>CH 633435 A5<br>DE 2841146 A1<br>GB 2006047 A<br>JP 1256274 C<br>JP 54092669 A<br>JP 59030085 B<br>NL 7809667 A | 15-01-1979<br>15-12-1982<br>29-03-1979<br>02-05-1979<br>12-03-1985<br>23-07-1979<br>25-07-1984<br>26-03-1979 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5863590 A
- US 4915972 A

**In der Beschreibung aufgeführte Nicht-Patentliteratur**

- **KWOK et al.** *International Journal of Food Science and Technology,* 1995, vol. 30, 263 ff
- **WILKENS et al.** *Food Technology,* 1967, vol. 21, 1630 ff
- **NELSON et al.** *Journal of Food Science,* 1976, vol. 41, 57 ff